# EUROPEAN PATENT APPLICATION

(11) **EP 4 738 671 A1**
(43) Date of publication of application: **06.05.2026**
(21) Application number: 24315504.1
(22) Date of filing: 31.10.2024
(51) Int. Cl.: H02M 1/00, H02M 1/08, H02M 7/219

(54) **A RECTIFIER AND METHOD FOR A RECTIFIER**

(71) Applicant: NXP B.V., 5656 AG Eindhoven (NL)
(72) Inventor: Vallet, Mathieu, 31023 Toulouse (FR); Bulzomi, Domenico, 5656 AG Eindhoven (NL); Lefevre, Xavier, 31023 Toulouse (FR)
(74) Representative: Krott, Michel

(57) **Abstract**

This disclosure generally relates to a rectifier, a method for a rectifier, and a computer program and more specifically adjusting at least one switching time for a rectifier.

## Description

### TECHNICAL FIELD

This disclosure generally relates to a rectifier, a method for a rectifier, and a computer program and more specifically adjusting at least one switching time for a rectifier.

### BACKGROUND

A rectifier converts alternating current, AC, into direct current, DC. Rectifiers are one of the key elements of many electrical systems, for example wireless charging systems. For various applications, high efficiency rectifiers are desired.

### SUMMARY

According to a first aspect of the present disclosure, there is provided a rectifier comprising: a first input, a first switch,
wherein the rectifier is configured to activate the first switch based on a first switching signal at a first time to provide an output voltage at the output, the rectifier further comprising:
an offset circuit configured to generate an offset current signal based on the output voltage.

In one or more embodiments, the offset current signal is proportional to the output voltage.

In one or more embodiments, the offset circuit further comprises: a reference current generator with a current convertor for converting the output voltage into a reference current, at least one first node coupled to the output voltage, an output node that provides the offset current signal based on the reference current.

In one or more embodiments, the offset circuit further comprises a voltage divider coupled between the at least one first node and at least one second node coupled to ground, the voltage divider configured to provide a second voltage proportional to the output voltage, wherein the voltage divider provides the second voltage to an input node of the current convertor.

In one or more embodiments, the offset current signal is further based on a second current.

In one or more embodiments, the second current is based on: the first input at the first time and the output voltage at the first time.

In one or more embodiments, the offset circuit further comprises: a calibration current source configured for continuously providing the second current.

In one or more embodiments, the rectifier further comprises a first switching signal generator which generates a first activation signal based on the first switching signal, wherein the first activation signal activates the first switch at a second time based on the first time.

In one or more embodiments, the first switching signal is generated based on: the first input, the output voltage, and the offset current signal.

In one or more embodiments, the first switching signal is generated based on a comparison between the first input and the output voltage, wherein the comparison is biased by the offset current signal.

In one or more embodiments, the rectifier further comprises: a calibration circuit for providing the second current, the calibration circuit comprising:
a comparator coupled to the first input and to the output voltage, the comparator further comprising a trigger input coupled to the first switching signal,
wherein the comparator is configured to provide a comparator signal based on a comparison of the output voltage and the first input in reaction to the trigger signal on the trigger input,
wherein the calibration circuit is configured for providing the second current based on the comparator signal.

In one or more embodiments, the rectifier further comprises:
a second input,
a second switch between the second input and the output,
wherein the rectifier comprises a second switching signal generator which is configured to generate a third switching signal at a third time,
wherein the rectifier is configured to activate the second switch based on the third switching signal to provide the output voltage at the output,
wherein the third time is based on the offset current signal and preferably further based on the second input and/or preferably further based on the output voltage.

According to a second aspect of the present disclosure, there is provided a method for adjusting a switching time of a rectifier with a first switch between a first input and an output, the method comprising:
activating the first switch based on a first switching signal at a first time to provide an output voltage at the output of the rectifier,
generating an offset current signal based on the output voltage.

In one or more embodiments, the method further comprises:
providing a second current to modify the offset current signal, wherein the second current is preferably determined in a calibration step based on: the first input at the first time and the output voltage at the first time;
wherein further preferably the second current is continuously provided when no calibration step is carried out.

In one or more embodiments, the method further comprises:
generating a first activation signal based on the first switching signal, wherein the first switching signal is generated based on: the first input, the output voltage, and the offset current signal;
activating, by the first activation signal, the first switch at a second time based on the first time.

According to a third aspect of the present disclosure, there is provided a non-transient machine-readable storage medium comprising instructions that, when executed by a controller for a rectifier, causes the controller to:
activate a first switch of the rectifier based on a first switching signal at a first time to provide an output voltage at the output of the rectifier,
generate an offset current signal based on the output voltage.

In one or more embodiments, the instructions cause the controller to select the offset current signal proportional to the output voltage.

In one or more embodiments, the instructions cause the controller to select the offset current signal based on a second current.

In one or more embodiments, the instructions cause the controller to select the second current based on the first input at the first time and the output voltage at the first time.

In one or more embodiments, the instructions cause the controller to continuously provide the second current.

The above discussion is not intended to represent every example embodiment or every implementation within the scope of the current or future Claim sets. The Figures and Detailed Description that follow also exemplify various example embodiments. Various example embodiments may be more completely understood in consideration of the following Detailed Description in connection with the accompanying Drawings.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
- Fig. 1:: an example embodiment of a rectification process;
- Fig. 2:: a rectification process according to an example embodiment;
- Fig. 3a:: an example embodiment of a rectifier;
- Fig. 3b:: an example embodiment of an offset circuit;
- Fig. 4:: an example embodiment of a reference current generator; and
- Fig. 5:: an example embodiment of a method for rectifier.

### DETAILED. DESCRIPTION

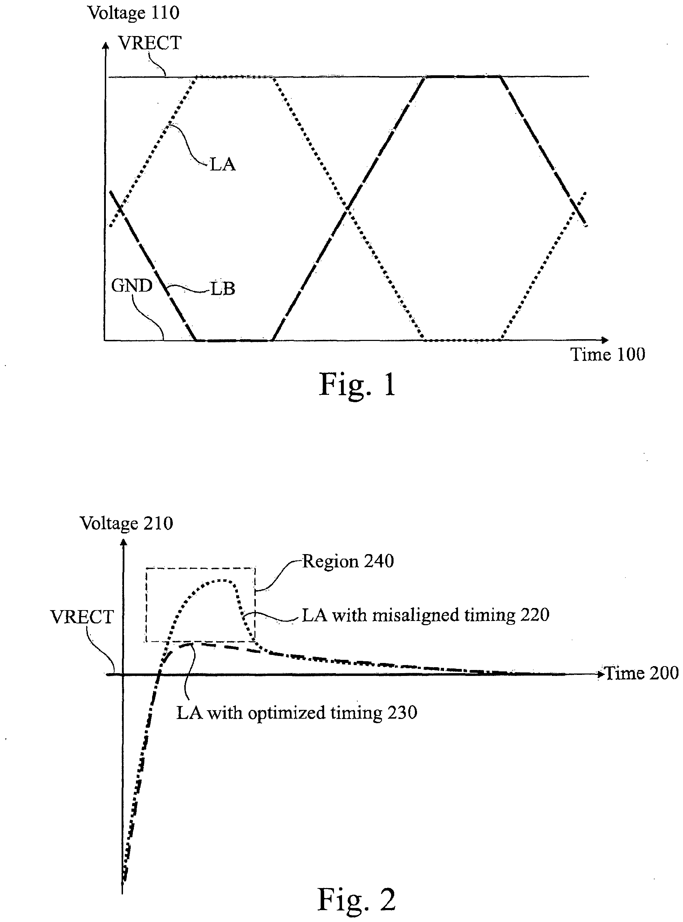

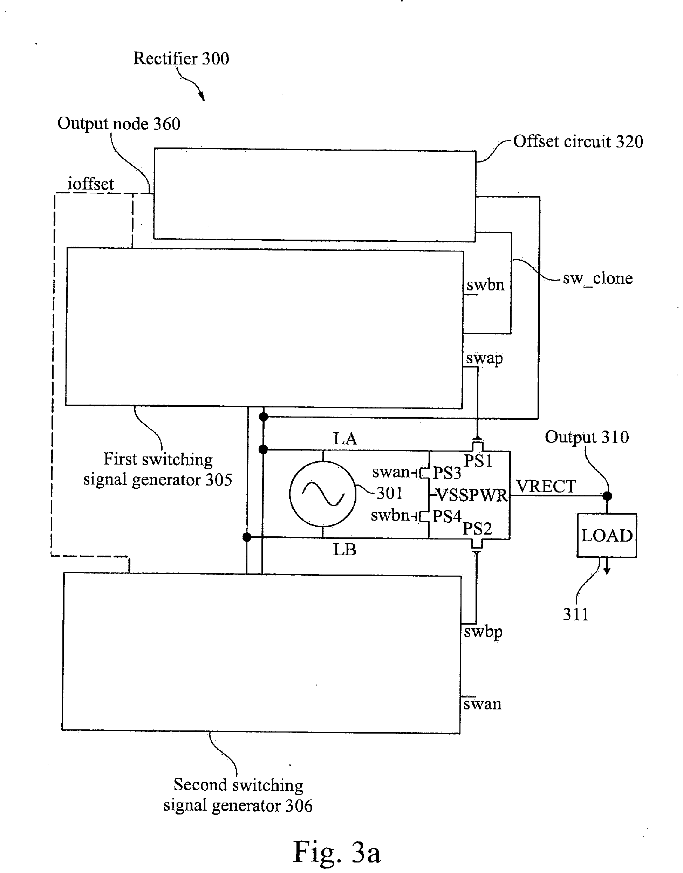

Fig. 1 shows an example embodiment of a rectification process. Namely, Fig. 1 shows a rectification process in which a voltage 110 is provided as a function of time 100. Fig. 1 shows an idealized state, where a first input LA and a second input LB of alternating current is converted into a rectified output voltage VRECT due to operation of switches of a rectifier, for example the rectifier of Fig. 3a, as will be detailed below.

To increase efficiency of the rectifier, special care has to be given for the timing controls of the power switches of the rectifier, to ensure energy transfer to the output of the rectifier at the appropriate time, as shown in Fig. 1. Some intrinsic delays already exist due to the electronic components of the rectifier, for example in the switching signal generators like the first switching signal generator 305 and the second switching signal generator 306 shown in Fig. 3a. Sometimes switching signal generators are also referred to as control chain. Further, the timing of switching in rectifiers may be further subject to perturbations, for example due to parasitic capacities, in particular due to parasitic capacities of the switches. It may be advantageous to at least partially compensate delays of the timing of the switches in the rectifier caused by these effects.

In some applications of rectifiers, for example for charging batteries but also other fields of application, the output voltage VRECT may change over time. In the example of a battery as a load, for example load 311 shown in Fig. 3a, the following may occur: If the battery is in a discharged state, the output voltage VRECT may be lower than for a battery with an intermediate charge. As the battery approaches full charge, the output voltage VRECT may further increase. Thus, it is desirable to provide a rectifier that adopts to changes in the output voltage VRECT. It may be desirable that the efficiency of the rectifier remains high even as the output voltage VRECT is changing.

Fig. 2 shows a rectification process according to an example embodiment. In the example of Fig. 2, the voltage 210 at the output of a rectifier is shown as a function of time 200. Curve 220 shows a misaligned timing of a first switch which connects the first input LA to the output voltage VRECT. If the first switch is activated too late, the voltage of LA mismatches VRECT. As shown in Fig. 2, curve 220 shows an overshooting behavior wherein the voltage of LA raises above the value of VRECT. This overshooting behavior seen in region 240 leads to losses and thus reduces the efficiency of the rectifier. Notably, in region 240 the rectifier may operate in a passive mode, in which a diode in the first switch may pass a current leading to losses due to high diode resistance.

According to an embodiment, the timing of switching VA is optimized as shown in curve 230. Curve 230 shows the first input LA with optimized timing. Here, the situation resembles the ideal condition shown in Fig. 1 for the first input LA. Here, the first switch is activated at an optimum time, so that the first input only very slightly or not at all overshoots the output voltage VRECT. Thus, no current passes through the diode in the first switch and losses of region 240 are avoided.

As illustrated in Fig. 2, it may be beneficial to improve the timing, in particular the crossing of the first input LA with the output voltage VRECT. Even more specifically, it may be desirable to improve the timing of the crossing between the first input LA and the output voltage VRECT which occurs as the first input LA rises, because at this moment the most current passes through the first switch, for example through the first switch PS1 of Fig. 3a.

Thus, optimizing the timing, for example the timing of this crossing may have a significant effect on the efficiency of the rectifier. However, also optimizing the timing, for example other crossings for other switches, for example at least one of switches PS2, PS3, and PS4, may also be beneficial.

To optimize the switching signals which activate the switches, an offset signal is required which can be used to offset the switching time of the rectifier, for example the switching time of the first switch PS1 of Fig. 3a. Using such an offset signal may allow optimizing the switching signal time chain as discussed with reference to Fig. 2 above.

In the following, it will be explained how this offset signal may be obtained. In particular, but not limited thereto, the offset signal may be an offset current signal.

As the output voltage VRECT may change over time, some embodiments provide an improved offset signal and/or allow to improve the timing of the rectifier even as the output voltage VRECT changes in a simplified and energy efficient manner. •

Fig. 3a shows an example embodiment of a rectifier.

The rectifier 300 may comprise a first input LA and a first switch PS 1. The rectifier 300 may be configured to activate the first switch PS 1 based on a first switching signal, for example signal swap and/or sw_clone, at a first time to provide an output voltage VRECT at the output 310. The rectifier 300 may further comprise: an offset circuit 320 configured to generate an offset current signal ioffset based on the output voltage VRECT.

The efficiency of the rectifier may be influenced by factors as resistive losses of the circuitry, switching losses of the switches, and/or timing accuracy of the activation of the switches of the rectifier, for example switches PS1, PS2, PS3, and/or PS4 of rectifier 300.

The resistive and the switching losses may be optimized with an appropriate choice of components for the switches, for example by selecting the appropriate type of metal oxide semiconductor, MOS, for the switches and/or the correct size of the switches. Notably, switches PS1, PS2, PS3 and/or PS4 may be optimized accordingly. The choice of MOS types for switches PS1, PS2, PS3 and/or PS4 may have an impact on the requirements for timing accuracy of activation of the switches. In particular, the selection of switches PS1 to PS4 may affect the required offset signal discussed with reference to Fig. 2 above. For example, different switches may have different parasitic capacities, leading to different requirements for the offset signals. Further, the behavior of parasitic capacities and/or other parameters with external parameters such as temperature may be different.

As shown in Fig. 3a, the first input LA may be coupled to an alternating current source 301, for example comprising an antenna and optionally comprising a filter (not shown). The alternating current source 301 may be a power source for transferring energy to load 311. Load 311 may be a battery or another type of direct current, DC, device. As shown in Fig. 3a, rectifier 300 may comprise additional switches, for example second switch PS2, third switch PS3, and/or fourth switch PS4. As discussed with reference to Fig. 2, the first switch and/or additional switches may be activated as a function of time to provide the output voltage VRECT at output 310.

Using a current signal as the offset signal, for example current signal ioffset, may have the advantage that comparison operations for switch activation decisions may be simplified. Using a current signal as the offset signal may give more flexibilities for designing electronic circuity and allow for wide ranges of offset values achieved. Further, if the rectifier is used for a large value range of output voltage VRECT, the optimum timing of switch activation may change and consequently a large offset signal may be required. In some examples, the required offset, as shown in Fig. 2, may correspond to several nanoseconds of timing adjustment. In some embodiments, using the offset current signal may be preferable over using other means to signal the offset signal, for example an offset voltage signal. Using the offset current signal may allow simplified topologies of electronic circuity, for example compared to topologies of electronic circuity for offset voltage signals. In some embodiments, achieving a required offset range may require less complex circuitry if a current offset signal is used compared to using a voltage signal as the offset signal for the same required offset range.

Generating an offset current signal ioffset based on the output voltage VRECT may allow the timing of the rectifier to be optimized based on the output voltage. Taking the output voltage VRECT into account may improve efficiency of the rectifier. In some embodiments, taking the output voltage VRECT into account improves the efficiency of the rectifier, as the output voltage changes, for example during charging of a battery connected as a load to the rectifier, for example as load 311 in Fig. 3a.

The first switching signal may be signal swap and/or signal sw_clone as shown in Fig. 3a. The first switching signal may be generated by first switching signal generator 305.

The offset current signal ioffset may be proportional to the output voltage VRECT. Making the offset current signal ioffset proportional to the output voltage may allow to optimize the activation of the switches, for example in cases in which the optimum timing of switch activation also is proportional to the output voltage VRECT.

As discussed with reference to Fig. 2, in many applications the output voltage VRECT may change over time. Thus, providing an offset current signal proportional to the output voltage VRECT may allow an efficient and/or simple way for the rectifier to adapt to changes in the output voltage VRECT, for example due to different charging states over time of a battery as load 311.

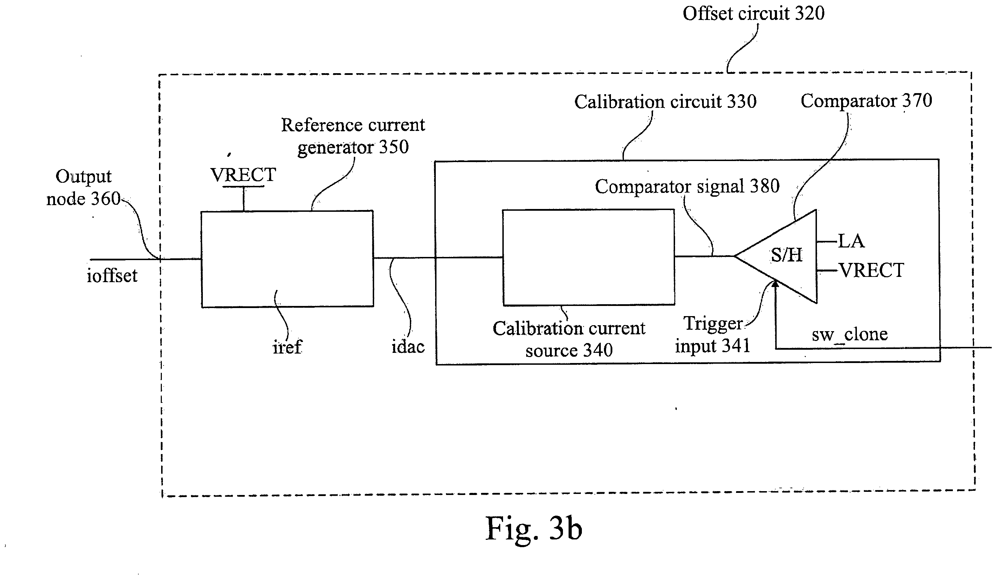

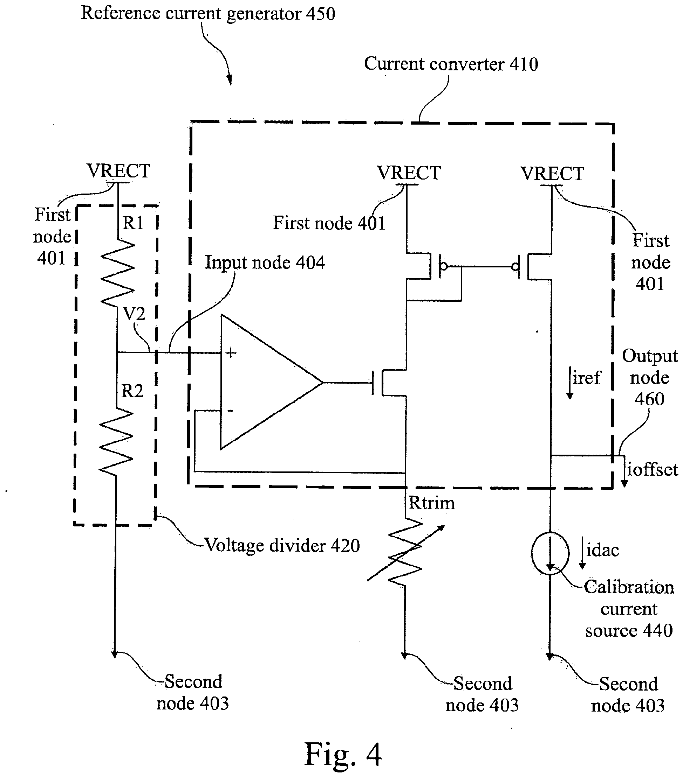

As shown in Fig. 3b and Fig. 4, the offset circuit 320 of a rectifier, for example of rectifier 300 of Fig. 3a, may further comprise: a reference current generator 350, 450 for converting the output voltage VRECT into a reference current iref. For example, Fig. 3b and Fig. 4 show embodiments of a reference current generator 350, 450. The reference current generator 350, 450 may comprise a current convertor, for example current convertor 410 as shown in Fig. 4. The offset circuit 320 may further comprise at least one first node 401 coupled to the output voltage VRECT, and/or an output node 360, 460 that provides the offset current signal ioffset. As shown in Fig. 4, offset current signal ioffset provided at output node 460 may be based on the reference current iref. As shown in Fig. 3b, offset current signal ioffset provided at output node 360 may be based on the reference current iref.

The rectifier 300 may comprise a voltage divider 420, for example voltage divider 420 shown in Fig. 4 as part of reference current generator 450. As shown in Fig. 4, voltage divider 420 may be coupled between the at least one first node 401 and at least one second node 403 coupled to ground. In Fig. 4, three second nodes 403 are shown. In the example of Fig. 4, all second nodes 403 are coupled to ground. In other embodiments, at least one of the at least one second node 403 may be connected to a different potential than ground.

In Fig. 4, voltage divider 420 is part of reference current generator 450. In other embodiments, a voltage divider may be part of offset circuit or a different circuit.

Voltage divider 420 may comprise a first resistor R1 and a second resistor R2. Voltage divider 420 may be configured to provide a second voltage V2 proportional to the output voltage VRECT. The voltage divider may provide the second voltage V2 to an input node, for example input node 404 of the current convertor 410 as shown in Fig. 4.

Voltage divider 420 may provide simple means for generating a signal proportional to the output voltage VRECT and may simplify the design of current convertor 410. A voltage divider may contribute to low current consumption and/or may improve energy efficiency. Using a voltage divider may be advantageous in embodiments in which accuracy requirements for the second voltage V2 are relaxed.

As shown in Fig. 4, further components may be present in reference current generator 450, for example a tunable resistor Rtrim which allows further optimization of the circuitry.

The offset current signal ioffset may be further based on a second current idac.

This may allow to further modify the offset current signal to further optimize the timing of activation of the switches of the rectifier, for example of the first switch PS 1 as shown in Fig. 3a. In some embodiments, using a second current may allow further optimization for parts of the rectifier that show characteristics which may be not proportional to the output voltage VRECT. For example, the second current may be used to calibrate the rectifier for variations like temperature or aging of components. As these characteristics, for example temperature, may change less slowly than the output voltage VRECT, calibration steps for determining the second current may not needed to be carried out frequently, thereby reducing the amount of energy required to carry out calibration steps. In other words, basing the offset current signal ioffset on a component based on the output voltage VRECT and on a second current, in some examples not based on the output voltage VRECT, in some examples based on a previous value of the output voltage VRECT, may simplify an optimization of the timing and/or lower the requirement to conduct a calibration to determine an accurate value of the second current idac during operation and/or as conditions change, for example the voltage of the output voltage VRECT.

The second current idac may be based on the first input LA at the first time and/or the output voltage VRECT at the first time.

Basing the second current idac on measurements of the first input LA and/or the output voltage VRECT at the first time may allow a calibration of the rectifier.

The offset circuit 320 may further comprise: a calibration current source 340, 440 configured for continuously providing the second current idac.

This may allow providing a calibrated signal of the offset current signal after a calibration, for example a calibration conducted during the first time. Thus, the offset current signal ioffset may dynamically change as the output voltage VRECT changes, thereby improving the efficiency of the rectifier as the output voltage VRECT changes. At the same time, the second current idac may be continuously provided, thus allowing to take calibration information continuously into account without the need to frequently update the calibration. Thus, a calibration may be much less often required to update the value of the second current idac as in cases where an offset current is not based on the output voltage VRECT.

The rectifier 300 may comprise a first switching signal generator 305. The first switching signal generator 305 may generate a first activation signal, for example first activation signal swap shown in Fig. 3a. In some embodiments, the first activation signal and the first switching signal may be identical. For example, the first activation signal swap and the first switching signal sw_clone may be identical. In other embodiments, the first activation signal may be based on the first switching signal. For example, the first activation signal swap may be based on the first switching signal sw_clone. The first activation signal may activate the first switch at a second time based on the first time. For example in Fig. 3a, the first activation signal swap may activate the first switch PS1 at a second time based on the first time.

Using this first activation signal may improve efficiency of the rectifier. For example, using the first activation signal may allow maximizing the starting current in the first switch PS 1 and/or minimize the reverse currents occurring in the first switch PS 1. If the first activation signal swap is based on the first switching signal sw_clone, this may allow for optimizing the timing of the rectifier based on the first switching signal while driving the switch, for example first switch PS 1 with the first activation signal swap as shown in the example of Fig. 3a. This may have the advantage that a parasitic capacity of the first switch PS 1 has a reduced or no effect on the first switching signal sw_clone. This may simplify and/or improve the timing optimization as discussed with reference to Fig. 2. While explained for the first switch PS 1, use of an activation signal and a switching signal may similarly be carried out for other switches, for example for fourth switch PS4 based on fifth switching signal swbn or other switches like switches PS2 and PS3 with the associated switching signals swbp and swan, respectively, as shown in Fig. 3a.

The first switching signal and/or the first activation signal may be generated based on: the first input LA, the output voltage VRECT, and/or the offset current signal ioffset.

This may allow the first switching signal to optimize the timing of the rectifier, for example rectifier 300 thereby improving efficiency. The offset current signal may allow to optimize the timing and thereby at least partially arrive a behavior as shown by curve 230 in Fig. 2, thereby improving the efficiency of the rectifier. Using the offset current signal may allow to dynamically account for variations in the output voltage VRECT in a simplified manner. In some embodiments, calibration steps to determine the second current may be required less often, thereby reducing the amount of energy required for calibration and improving overall efficiency of the rectifier 300.

The first switching signal swap, sw_clone may be generated based on a comparison between the first input LA and the output voltage VRECT. The comparison may be biased by the offset current signal ioffset. In other words, the comparison and thus the generation of the first switching signal may depend on the value of the offset current signal ioffset. This may allow optimizing the switching time as discussed with reference to Fig. 2.

In some embodiments, this may allow first switching signal generator 305 in Fig. 3 to use the offset current signal ioffset in a simple and efficient manner. Biasing the comparison may be a simple way to optimize the timing of the first switching signal as discussed with reference to Fig. 2. In embodiments in which the offset current signal is proportional to the output voltage VRECT, biasing the comparison may allow for a simple and/or efficient optimization as the output voltage VRECT changes. This may reduce the need to calibrate the rectifier 300. For example, in some embodiments, the frequency at which the second current must be determined may be reduced.

As shown in Fig. 3b, the rectifier 300 may further comprise a calibration circuit 330 for providing the second current idac. The calibration circuit 330 may comprise:
a comparator 370 coupled to the first input LA and to the output voltage VRECT, the comparator further comprising a trigger input 341 coupled to the first switching signal.

The comparator 370 may be configured to provide a comparator signal 380 based on a comparison of the output voltage VRECT and the first input LA in reaction to the trigger signal on the trigger input 341. The calibration circuit 330 may be configured for providing the second current idac based on the comparator signal 380.

A comparator, for example comparator 370, may be a sample and hold comparator.

In some embodiments, the second current may be provided continuously. In some embodiments, the second current may be provided by controlling the calibration current source 340, 440.

Using the trigger input 341 of comparator 370 may allow for determining the values of the first input LA and the output voltage VRECT at the first time. The trigger input 341 may activate the sample and hold functionality of the comparator, for example comparator 370. Thus, it may be possible to provide a calibration current idac to account for systematic effects of the rectifier which influence an optimum timing of switch activation, for example activation of the first switch PS1.

As shown in Fig. 3b, the offset current ioffset may be a sum of the second current and the reference current iref. Thus, the reference current iref may optimize the timing as the output voltage VRECT changes, while the second current idac may provide an offset which is determined at the first time and may not depend on dynamic changes of the output voltage VRECT.

As shown in Fig. 3a, the rectifier 300 may further comprise: a second input LB and/or a second switch PS2 between the second input-LB and the output 310.

The rectifier 300 may comprise a second switching signal generator 306 which may be configured to generate a third switching signal swbp at a third time. The rectifier 300 may further be configured to activate the second switch PS2 based on the third switching signal swbp to provide the output voltage VRECT at the output 310. The third time may be based on at least one of the following: the offset current signal ioffset, the second input LB, the output voltage VRECT.

This may allow to also optimize a timing of the second switch PS2. Using this second switching signal generator 306 may reduce complexity of the rectifier, as the offset circuit 320 may be used for both the first switching signal generator 305 and the second switching signal generator 306 as shown in Fig. 3a. This may also increase energy efficiency of rectifier 300 as any optimization of the offset current ioffset may be used for optimizing the switching of the first switch PS 1 and/or the second switch PS2.

In a similar manner, additional switch signals may be generated, for example fourth switching signal swan for third switch PS3 and fifth switching signal swbn for fourth switch PS4 as shown in Fig. 3a. As also shown in Fig. 3a, fourth switching signal swan may be generated by the second switching signal generator 306 and/or fifth switching signal swbn may be generated by first switching signal generator 305. By operating the switches with first switching signal generator 305 and second switching signal generator 306, a switching pattern as shown in Fig. 1 may be achieved.

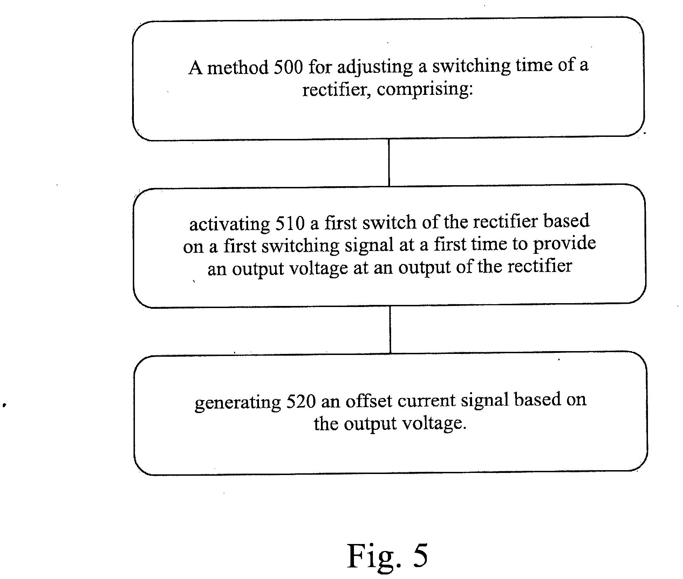

Fig. 5 shows an example embodiment of a method for rectifier. As shown in Fig. 5, A method 500 for adjusting a switching time of a rectifier 300 with a first switch PS 1 between a first input LA and an output 310 may comprise the following steps:
Activating, in step 510, the first switch based on a first switching signal swap, sw_clone at a first time to provide an output voltage VRECT at the output 310 of the rectifier 300.

The method 500 may further comprise: Generating, in step 520, an offset current signal ioffset based on the output voltage VRECT.

Generating a current signal for controlling the rectifier, for example offset current signal ioffset, may increase robustness of the rectifier as operational conditions change, for example the temperature of the rectifier 300 and/or at least one of switches PS 1 to PS4. Basing the signal, for example offset current signal ioffset, on the output voltage VRECT may reduce the need for calibrations of the rectifier as described above.

In addition, the method 500 may further comprise: providing a second current idac to modify the offset current signal ioffset. The second current idac may be determined in a calibration step. The determination may be based on the first input LA at the first time and/or the output voltage VRECT at the first time. The second current idac may be continuously provided when no calibration step is carried out.

This may further improve the energy efficiency of the rectifier as discussed above.

The method 500 may further comprise: generating a first activation signal swap based on the first switching signal sw_clone. The first switching signal swap, sw_clone may be generated based on at least one of the following: the first input LA, the output voltage VRECT, and the offset current signal ioffset.

The method may further comprise: activating, by the first activation signal swap, the first switch PS1 at a second time based on the first time.

As stated above, this may facilitate optimization of the timing as discussed with reference to Fig. 1 and Fig. 2.

According to a third aspect of the present disclosure, there is provided a non-transient machine-readable storage medium comprising instructions that, when executed by a controller for a rectifier, causes the controller to:
activate a first switch of the rectifier based on a first switching signal at a first time to provide an output voltage at the output of the rectifier, and/or
generate an offset current signal based on the output voltage.

In one or more embodiments, the instructions cause the controller to select the offset current signal proportional to the output voltage.

In one or more embodiments, the instructions cause the controller to select the offset current signal based on a second current.

In one or more embodiments, the instructions cause the controller to select the second current based on the first input at the first time and the output voltage at the first time.

In one or more embodiments, the instructions cause the controller to continuously provide the second current.

As discussed above, these instructions may facilitate optimization of a rectifier as described with reference to Fig. 1 and Fig. 2 above.

In this specification, example embodiments have been presented in terms of a selected set of details. However, a person of ordinary skill in the art would understand that many other example embodiments may be practiced which include a different selected set of these details. It is intended that the following claims cover all possible example embodiments. For example, examples which are based on an output voltage VRECT may be further or alternatively based on other voltages, for example VSSPWR as shown in Fig. 3a.

## Claims

1. A rectifier (300) comprising:
a first input (LA),
a first switch (PS 1),
wherein the rectifier (300) is configured to activate the first switch (PS1) based on a first switching signal (swap, sw_clone) at a first time to provide an output voltage (VRECT) at the output (310),
the rectifier (300) further comprising:
an offset circuit (320) configured to generate an offset current signal (ioffset) based on the output voltage (VRECT).

2. The rectifier (300) of claim 1, wherein the offset current signal (ioffset) is proportional to the output voltage (VRECT).

3. The rectifier (300) of one of the previous claims, wherein the offset circuit (320) further comprises:
a reference current generator (350, 450) with a current convertor (410) for converting the output voltage (VRECT) into a reference current (iref),
at least one first node (401) coupled to the output voltage (VRECT),
an output node (360, 460) that provides the offset current signal (ioffset) based on the reference current (iref).

4. The rectifier (300) of claim 3, wherein the offset circuit (320) further comprises a voltage divider (420) coupled between the at least one first node (401) and at least one second node (403) coupled to ground,
the voltage divider (420) configured to provide a second voltage (V2) proportional to the output voltage (VRECT), wherein the voltage divider provides the second voltage (V2) to an input node (404) of the current convertor (410).

5. The rectifier (300) of one of the previous claims, wherein the offset current signal (ioffset) is further based on a second current (idac).

6. The rectifier (300) of claim 5, wherein the second current (idac) is based on:
the first input (LA) at the first time and
the output voltage (VRECT) at the first time.

7. The rectifier (300) of claim 5 or claim 6, wherein the offset circuit (320) further comprises:
a calibration current source (340, 440) configured for continuously providing the second current (idac).

8. The rectifier (300) of one of the previous claims, wherein the rectifier (300) further comprises a first switching signal generator (305) which generates a first activation signal (swap) based on the first switching signal (sw_clone),
wherein the first activation signal (swap) activates the first switch (PS1) at a second time based on the first time.

9. The rectifier (300) of one of the previous claims, wherein the first switching signal (swap, sw_clone) is generated based on:
the first input (LA),
the output voltage (VRECT), and
the offset current signal (ioffset).

10. The rectifier (300) of claim 9, wherein the first switching signal (swap, sw_clone) is generated based on a comparison between the first input (LA) and the output voltage (VRECT), wherein the comparison is biased by the offset current signal (ioffset).

11. The rectifier (300) of any of claims 5-10, further comprising:
a calibration circuit (330) for providing the second current (idac), the calibration circuit (330) comprising:
a comparator (370) coupled to the first input (LA) and to the output voltage (VRECT), the comparator further comprising a trigger input (341) coupled to the first switching signal (swap, sw_clone),
wherein the comparator (370) is configured to provide a comparator signal (380) based on a comparison of the output voltage (VRECT) and the first input (LA) in reaction to the trigger signal on the trigger input (341),
wherein the calibration circuit (330) is configured for providing the second current (idac) based on the comparator signal (380).

12. The rectifier (300) of one of the previous claims, wherein the rectifier (300) further comprises:
a second input (LB),
a second switch (PS2) between the second input (LB) and the output (310),
wherein the rectifier (300) comprises a second switching signal generator (306) which is configured to generate a third switching signal (swbp) at a third time,
wherein the rectifier (300) is configured to activate the second switch (PS2) based on the third switching signal to provide the output voltage (VRECT) at the output (310),
wherein the third time is based on the offset current signal (ioffset) and preferably further based on the second input (LB) and/or preferably further based on the output voltage (VRECT).

13. A method (500) for adjusting a switching time of a rectifier (300) with a first switch (PS1) between a first input (LA) and an output (310), the method comprising:
activating (510) the first switch based on a first switching signal (swap, sw_clone) at a first time to provide an output voltage (VRECT) at the output (310) of the rectifier (300),
generating (520) an offset current signal (ioffset) based on the output voltage (VRECT).

14. The method of claim 13, further comprising:
providing a second current (idac) to modify the offset current signal (ioffset), wherein the second current (idac) is preferably determined in a calibration step based on:
the first input (LA) at the first time and
the output voltage (VRECT) at the first time;
wherein further preferably the second current (idac) is continuously provided when no calibration step is carried out.

15. The method of claim 13 or claim 14, further comprising:
generating a first activation signal (swap) based on the first switching signal (sw_clone), wherein the first switching signal (swap, sw_clone) is generated based on:
the first input (LA),
the output voltage (VRECT), and
the offset current signal (ioffset);
activating, by the first activation signal (swap), the first switch (PS1) at a second time based on the first time.
